# FASCICULE DE BREVET EUROPEEN

(11) **EP 0 560 638 B1**
(45) Date de publication et mention de la délivrance du brevet: **18.12.1996**
(21) Numéro de dépôt: 93400178.5
(22) Date de dépôt: 26.01.1993
(51) Int. Cl.: C03B 37/014

(54) **Procédé de fabrication d'une pièce cylindrique en verre, notamment en verre fluore**
Verfahren zur Herstellung eines zylindrischen Glasteiles, insbesondere aus Fluoridglas
Process for manufacturing cylindrical glass piece, especially from fluoride glass

(30) Priorité: 28.01.1992 FR 9200867
(43) Date de publication de la demande: 15.09.1993
(73) Titulaire: ALCATEL N.V., NL-1077 XX Amsterdam (NL)
(72) Inventeur: Baniel, Pascal, F-91130 Ris-Orangis (FR)
(74) Mandataire: Feray, Valérie

(56) Documents cités:
- EP-A- 0 406 796
- DD-C- 2 076
- PATENT ABSTRACTS OF JAPAN vol. 5, no. 58 (C-51)(730) 21 Avril 1981 & JP-A-56 009 230 (NIPPON DENSHIN DENWA KOSHA) 30 Janvier 1981
- PATENT ABSTRACTS OF JAPAN vol. 7, no. 7 (C-144)(1152) 12 Janvier 1983 & JP-A-57 166 328 (NIPPON DENSHIN DENWA KOSHA) 13 Octobre 1982
- PATENT ABSTRACTS OF JAPAN vol. 13, no. 399 (C-632)(3747) 5 Septembre 1989 & JP-A-01 141 824 (TOSHIBA CERAMICS CO) 2 Juin 1989

## Description

La présente invention concerne un procédé de fabrication d'une pièce cylindrique en verre, comme un barreau ou un tube, notamment mais non exclusivement en verre fluoré, destinée par exemple à la réalisation d'une préforme cylindrique pour fibre optique.

On sait que le traitement de certains verres, comme les verres fluorés, est très délicat et qu'en particulier tout contact physique avec un tel verre au cours de sa mise en forme introduit des impuretés et entraîne la formation de cristallites ou de microcristaux ; tous ces défauts ont pour effet de nuire à sa qualité optique.

Compte-tenu de ces difficultés, les techniques verrières classiques ne permettent pas d'obtenir par une seule opération une pièce cylindrique ayant simultanément les propriétés suivantes:
- une qualité optique excellente, c'est-à-dire que le verre la constituant est homogène,
- un état de surface parfait,
- des diamètres intérieur et extérieur très bien contrôlés (précision au moins égale à 50 µm),
- une longueur supérieure à 100 mm.

On connaît, par le document EP-A-0 406 796, un procédé d'élaboration d'un barreau de verre fluoré utilisant le principe du confinement par film gazeux, qui comprend les opérations suivantes :
- distribution en continu d'une poudre d'un mélange de produits halogénés sur un support déplaçable en continu de haut en bas, et placé, au début de la mise en marche du procédé, dans un conteneur ayant une cavité intérieure cylindrique de section supérieure de quelques dizaines de microns à celle du barreau à réaliser, et comprenant des moyens de chauffage pour assurer la fusion de la poudre,
- injection en permanence, entre le barreau en formation et la paroi de la cavité, d'un gaz, afin de réaliser une couche de gaz de quelques dizaines de microns d'épaisseur à une pression supérieure à celle qui environne le conteneur et ajustée en permanence de manière à éviter tout contact entre le matériau du barreau et la paroi intérieure du conteneur,
- chauffage de la partie supérieure du barreau en formation pour créer une zone dont la viscosité est de l'ordre de la poise.

Cette technique n'a pas été, jusqu'à présent, appliquée à la réalisation d'un tube en raison des difficultés particulières dues à la forme beaucoup plus complexe.

La présente invention a donc pour but d'adapter cette technique à la fabrication d'un tube, par exemple en verre fluoré.

La présente invention a également pour but de perfectionner cette technique dans le cas de la fabrication d'un barreau.

La présente invention propose à cet effet un procédé de fabrication d'une pièce cylindrique en verre, notamment mais non exclusivement en verre fluoré, ledit procédé comprenant les opérations suivantes :
- l'on met en oeuvre une cavité cylindrique verticale tapissée de membranes poreuses, dont les dimensions internes sont supérieures de quelques dizaines de microns à celles de ladite pièce, et dans laquelle est susceptible de coulisser un piédestal cylindrique constituant un support pour ladite pièce,
- on prévoit sur ledit piédestal une souche originelle constituée dudit verre,
- on chauffe ladite souche jusqu'à la fusion et on injecte un gaz en permanence dans lesdites membranes poreuses pour maintenir entre elles et ladite souche en fusion une couche de gaz de quelques dizaines de microns d'épaisseur évitant ainsi tout contact,
- on alimente ladite souche à l'état fondu par le haut de ladite cavité par une distribution continue d'une poudre des constituants dudit verre,
- on descend ledit piédestal au fur et à mesure de la formation de ladite pièce cylindrique à partir de ladite souche.

De manière très avantageuse :
- le piédestal a lui-même la forme d'un corps cylindrique creux fermé à sa partie inférieure par un piston,
- le piédestal contient initialement une charge solide en verre destinée à former la souche originelle,
- on extrait progressivement du piédestal la souche à l'état fondu en poussant le piston vers le haut.

Selon une caractéristique supplémentaire, le piédestal coulisse dans la cavité avec une couche de gaz intermédiaire.

De préférence, la pression de gaz dans les membranes poreuses est régulée de manière à maintenir dans la cavité à l'état stationnaire une colonne de verre fondu stable et de hauteur constante.

Par ailleurs, la pièce en formation est de préférence surmontée d'une colonne de verre fondu, l'interface à la température de transition vitreuse étant située au niveau de la base des membranes.

Avantageusement, les membranes poreuses sont réalisées en graphite de perméabilité DARCY de l'ordre de 10⁻¹⁵ m², et peuvent en outre être recouvertes d'une couche mince de pyrocarbone.

De même, toutes les faces du piédestal et du piston peuvent être recouvertes d'une couche mince de pyrocarbone.

Lorsque la pièce cylindrique est un tube :
- la cavité est tubulaire et tapissée de membranes poreuses coaxiales,
- le piédestal est annulaire.

Pour simplifier le dispositif de mise en oeuvre, les membranes ont alors même épaisseur et les pressions appliquées sur les faces interne et externe du tube en formation sont égales.

Lorsque la pièce cylindrique est un barreau :
- la cavité est tubulaire et creuse,
- le piédestal est tubulaire.

Les tubes et barreaux obtenus avec le procédé de l'invention présentent suivant toute leur longueur des tolérances inférieures ou égales à 50 µm sur leurs diamètres intérieur et extérieur.

Les propriétés mécaniques des pièces cylindriques obtenues selon le procédé de l'invention sont meilleures que celles des pièces élaborés antérieurement qui faisaient apparaître des micro-fractures dues à des inclusions et à des contraintes thermiques provenant des contacts avec les parois du moule ou du creuset ayant servi à leur fabrication.

En outre, la propreté chimique de la surface brute des pièces cylindriques selon l'invention permet d'envisager de très bonnes propriétés d'adhésion de revêtements, tels que des films minces protecteurs ou actifs ; les techniques de dépôt peuvent être par exemple le dépôt par plasma ou par ablation laser.

La qualité de la surface intérieure d'un tube selon l'invention permet d'envisager des applications intéressantes dans la fabrication directe de fibres optiques à coeur creux, par exemple pour la transmission de rayonnement à la longueur d'onde de 10,6 µm. La qualité de la surface interne est en effet prépondérante pour ce type de fibre.

D'autres caractéristiques et avantages de la présente invention apparaîtront au cours de la description suivante de modes de réalisation donnés à titre illustratif mais nullement limitatif.

Dans les figures suivantes :
- les figures 1 à 5 montrent très schématiquement un exemple de dispositif mettant en oeuvre le procédé selon l'invention dans ses différentes phases pour la fabrication d'un tube en verre fluoré,
- la figure 6 montre la répartition de la température dans un tube en formation,
- la figure 7 montre très schématiquement un exemple de dispositif mettant en oeuvre le procédé selon l'invention pour la fabrication d'un barreau.

Dans toutes ces figures, les éléments communs ou similaires portent les mêmes numéros de référence.

On décrira en premier lieu l'élaboration d'un tube, par exemple un tube de gaine pour préforme de fibre optique, constitué d'un verre de composition (en pourcentage molaire) 53 ZrF₄-20 BaF₂-4 LaF₃-4 AlF₃-19 NaF.

La longueur de ce tube est de 10 cm, son diamètre intérieur de 15 mm et son diamètre extérieur de 30 mm.

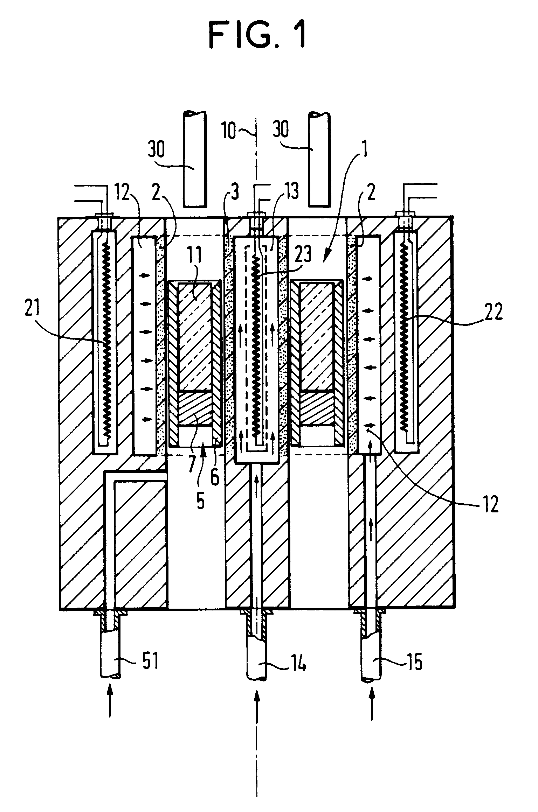

Dans les figures 1 à 5 apparaît schématiquement un dispositif comprenant une cavité tubulaire verticale 1 de révolution autour d'un axe 10 et tapissée sur une partie de sa hauteur par deux membranes poreuses coaxiales 2 et 3 réalisées en graphite dont la perméabilité de DARCY est de l'ordre de 10⁻¹⁵ m². Ce matériau peut être obtenu avec un grand degré de pureté, et il est inerte vis-à-vis des composés fluorés, surtout s'il est recouvert d'une couche mince (de 0,1 µm d'épaisseur par exemple) de pyrocarbone élaborée à haute température par exemple par pyrolyse de méthane. Les membranes 2 et 3 ne sont donc pas dégradées malgré une ambiance très corrosive due à la présence des composés fluorés.

Le diamètre intérieur de la membrane 2 est de 30,05 mm et le diamètre extérieur de la membrane 3 de 14,95 mm (avec une tolérance sur chaque diamètre de 0,01 mm). De préférence les deux membranes ont même épaisseur, égale à 2 mm.

La partie inférieure de la cavité tubulaire 1 non recouverte des membranes 2 et 3 présente les mêmes dimensions que ces membranes, avec les mêmes tolérances.

Pour leur alimentation en flux gazeux, les membranes 2 et 3 sont associées à deux corps creux coaxiaux 12 et 13 avec des arrivées de gaz 14 et 15 sous des pressions respectives P₁ et P₂.

Des cartouches de chauffage 21, 22, 23 réglables en hauteur sont prévues à l'intérieur et à l'extérieur de la cavité tubulaire 1.

Un piédestal annulaire 5, également de révolution autour de l'axe 10, est susceptible de coulisser dans la cavité 1. Il est formé d'un corps creux cylindrique et annulaire 6 fermé à sa partie inférieure par un piston 7 également annulaire. Toutes les surfaces internes du piédestal 5 destinées à venir en contact avec les composés fluorés sont recouvertes d'une couche mince de pyrocarbone, ce qui présente les avantages mentionnés précédemment.

Des moyens (non illustrés) sont prévus pour pousser le piston 7 vers le haut, et l'ensemble du piédestal 5 vers le bas.

Enfin, on a indiqué schématiquement par la référence 30 des moyens pour distribuer en continu au niveau de la partie supérieure de la cavité tubulaire 1 une poudre des constituants du verre de la pièce cylindrique à réaliser. Un système de régulation du débit de poudre (non illustré), bien connu de l'homme de l'art, peut en outre être prévu.

Avantageusement, l'ensemble du dispositif qui vient d'être décrit est installé dans une enceinte (non représentée) étanche à l'atmosphère, dans laquelle est introduit un gaz neutre tel que l'argon ou l'hélium. Lorsque les pièces cylindriques fabriquées sont constituées de verre fluoré, on peut diluer dans ce gaz neutre un gaz fluoré tel que de l'hexafluorure de soufre SF₆ ou du trifluorure d'azote NF₃, et ce afin de créer une atmosphère fluorante au niveau de la pièce en formation. Le gaz constituant l'atmosphère de l'enceinte sert également au confinement de la pièce cylindrique en formation ; il est favorable pour l'affinage du verre et pour l'homogénéisation du verre lors de l'affinage.

Au début du procédé d'élaboration du tube souhaité, on introduit dans le piédestal 5, à la température ambiante, une charge 11 en verre solide (souche originelle) ayant la composition indiquée plus haut (voir figure 1). Le piédestal 5 est lui-même installé entre les membranes poreuses 2 et 3.

Le procédé selon l'invention se déroule de la manière suivante.

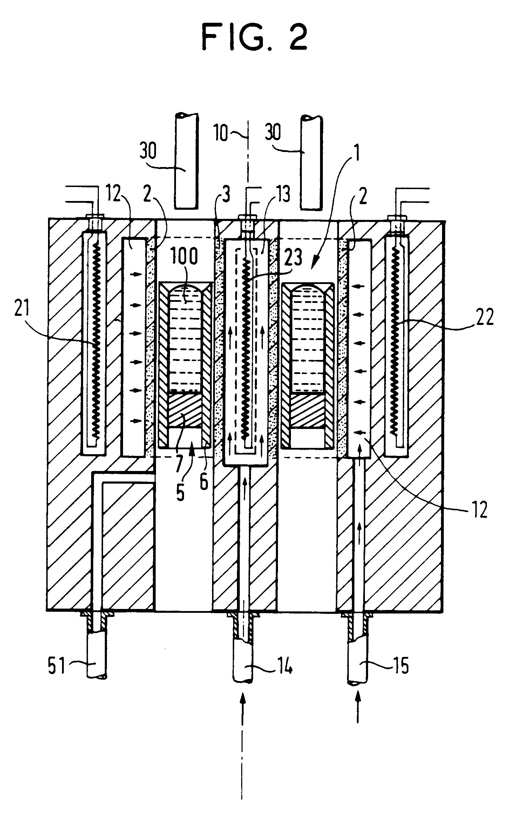

Grâce aux résistances chauffantes 21 à 23, la charge en verre 11 est fondue à l'intérieur du piédestal 5 à une température de l'ordre de 650°C à 700°C ; elle est référencée 100 dans la figure 2.

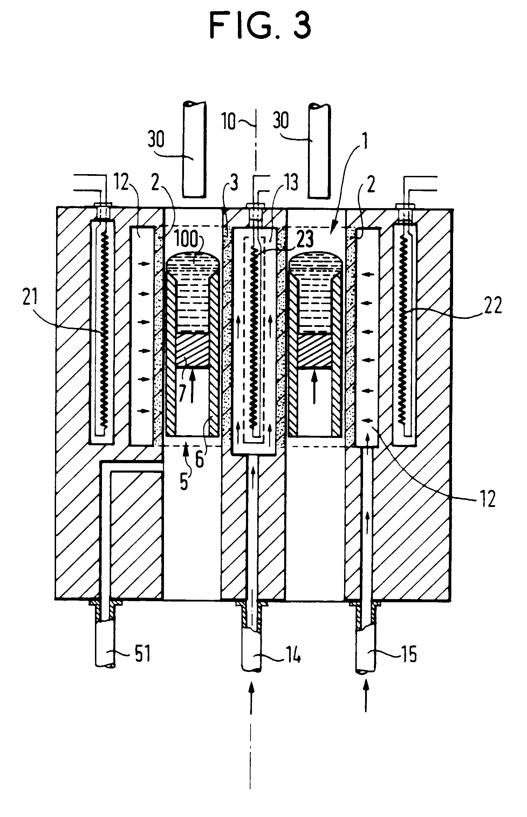

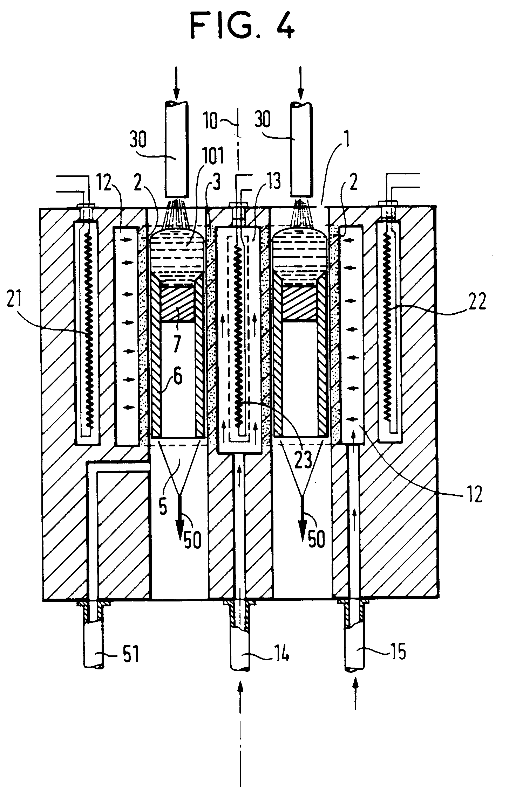

On pousse alors vers le haut le piston 7 dans le piédestal 5 de manière à réaliser, à partir de la charge fondue 100, une souche en fusion 101 au sommet du piédestal (voir figures 3 et 4).

Simultanément, on ajuste les pressions P₁ et P₂ à 0,1 bar au dessus de la pression atmosphérique pour réaliser une couche de gaz de quelques dizaines de microns d'épaisseur entre les membranes 2 et 3 et la souche en fusion 101 ; une couche de gaz est également maintenue entre ces membranes et la face externe du piédestal 5. La couche de gaz assure un confinement de la souche en fusion 101 et évite son contact avec la cavité 1.

Toujours de manière simultanée, on alimente la souche 101 en poudre de constituants du verre, à partir des moyens de distribution 30 (voir figure 4), et l'on descend le piédestal 5 (voir flèches 50), par exemple à la vitesse de 0,5 mm/min.

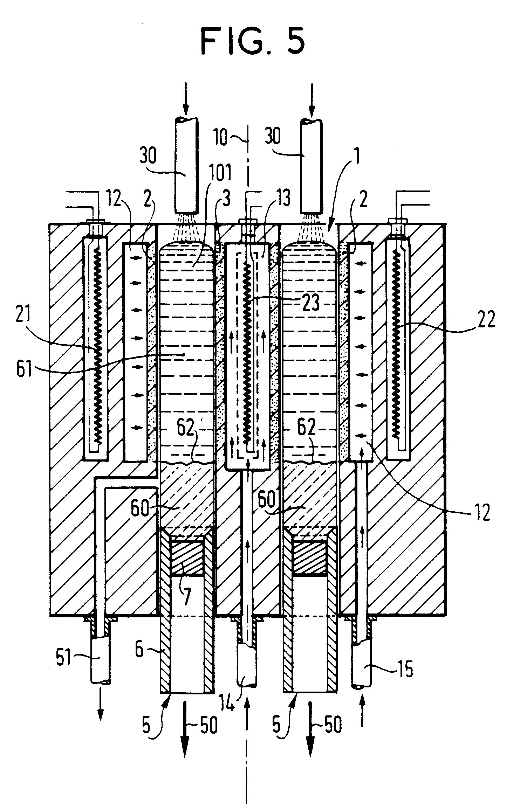

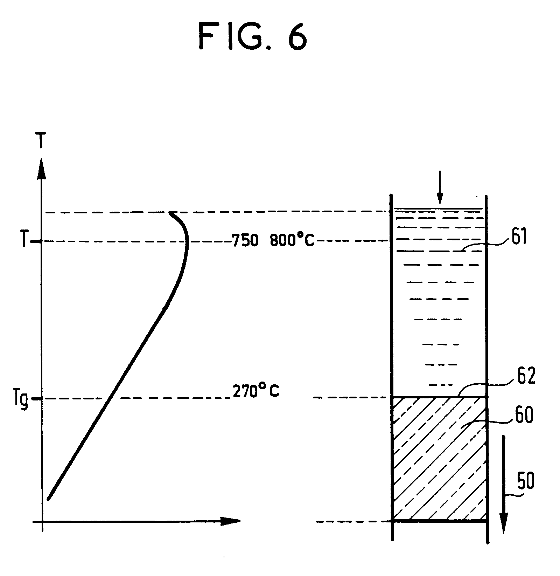

Après amorçage du processus, "l'état stationnaire" est illustré dans la figure 5. Le profil de température le long de la cavité tubulaire est schématisé dans la figure 6.

Il apparaît une portion de tube solide 60 surmontée d'une colonne de verre fondu 61. L'interface 62 correspondant à la température de transition vitreuse Tg du verre (entre 260 et 270°C) se situe sensiblement à la base inférieure des membranes 2 et 3.

Dans la colonne liquide 61, une zone très proche de la surface supérieure est portée à une température très élevée de l'ordre de 750°C à 800°C pour affiner le verre, c'est-à-dire éliminer toutes les microbulles qui auraient tendance à se former. Cette zone de chauffage est limitée à quelques millimètres pour assurer l'affinage sans risquer une décomposition trop importante de certains composés fluorés (voir figure 6).

Le gradient de température dans le tube solide 60 est par exemple de 100°C/cm. Ce gradient peut être éventuellement maîtrisé par l'adjonction de systèmes de refroidissement (non illustrés).

Un capteur de pression schématisé en 51 et situé au voisinage de l'interface 62 est destiné à permettre la régulation des deux pressions P₁ et P₂ pour ajuster le champ de pression dans le film de gaz de sorte que la hauteur de la colonne de verre fondu 61 reste constante pendant tout le tirage.

Bien entendu l'alimentation en continu en poudre par les moyens de distribution 30 est compatible avec la vitesse de défilement. Un détecteur de position de la surface supérieure de la colonne de verre fondu 61 peut être utilisé à cette fin.

Le déplacement vertical du tube peut être réalisé par des systèmes mécaniques de translation connus, tel que le système MFL-133-6 de la société HUNTINGTON. L'ensemble des opérations peut être piloté par un micro-ordinateur permettant de contrôler les pressions, la vitesse de défilement du tube et d'effectuer la régulation du débit de poudre.

On va maintenant décrire l'élaboration d'un barreau, par exemple un barreau de coeur pour préforme de fibre optique, constitué d'un verre fluoré de type ZBLAN, de composition (en pourcentage molaire) 54 ZrF₄-23 BaF₂-4 LaF₃-3 AlF₃-16 NaF.

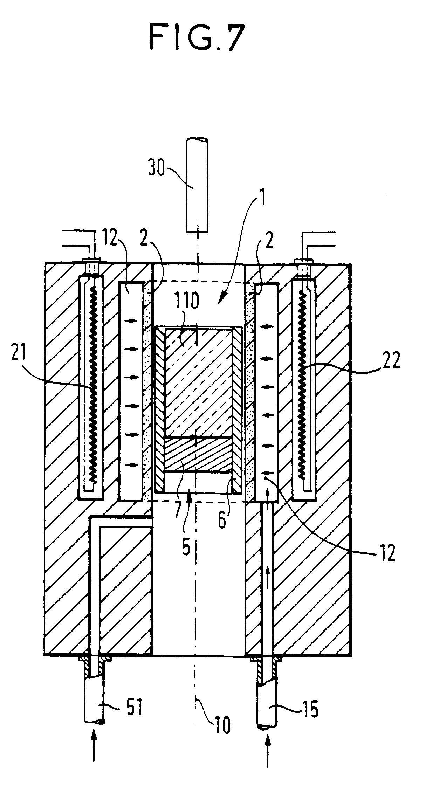

On utilise un dispositif du même type que celui décrit en relation avec les figures 1 à 5, mais adapté pour la fabrication d'un barreau. A cet effet, la cavité 1 est cylindrique creuse et non tubulaire, comme représenté en figure 7. La membrane poreuse 3, le corps creux 13, la cartouche de chauffage 23 et l'arrivée de gaz 14 sont donc supprimés.

Ce dispositif comporte une membrane poreuse 2 de diamètre intérieur égal à 15,095 mm et de hauteur utile environ égale à 80mm, usinée dans un graphite de perméabilité de Darcy de 2,7.10⁻¹⁵ m². Le piédestal 5 associé est formé d'un corps creux cylindrique 6, a une hauteur environ égale à 50 mm et un diamètre extérieur de 15,059 mm, ce qui correspond à un jeu radial de 18 µm, à la température ambiante, entre la membrane 2 et le piédestal 5. Le piston 7 fermant le piédestal 5 et ayant la forme d'un disque de diamètre extérieur égal à 9,95 mm est mobile à l'intérieur de la cavité intérieure du corps 6 du piédestal 5, le diamètre de cette cavité étant de 10mm. Le piédestal 5 et le piston 7 sont recouverts sur toutes leurs faces d'une fine couche de pyrocarbone permettant d'améliorer les propriétés (caractère inerte, anti-adhésion) des supports vis-à-vis du verre fluoré.

Une souche originelle (charge) 110 de verre fluoré solide de masse environ égale à 9 g, de diamètre légèrement inférieur à celui de la cavité intérieure du piédestal 5, et de hauteur égale à 27mm, repose sur le piston 7. L'ensemble piédestal 5-piston 7-souche solide 110 se trouve, à température ambiante, entouré par la membrane poreuse 2.

Tous les autres éléments du dispositif adapté à l'élaboration d'un barreau sont identiques à ceux décrits en relation avec les figures 1 à 5.

Le dispositif entier est installé dans une enceinte tubulaire étanche à l'atmosphère et permettant de travailler sous atmosphère contrôlée. Cette enceinte peut être purgée et évacuée sous vide de manière à éliminer l'humidité résiduelle. Il est aussi avantageux de connecter cette enceinte à une boîte à gants balayée par un gaz neutre et très sec (contenant moins de 1 ppm d'eau) et exempte de poussières risquant de contaminer le verre lors des étapes ultérieures de l'élaboration. Dans ce cas, l'introduction du verre peut se faire à l'abri de l'atmosphère.

Pendant toute la durée de l'élaboration du barreau souhaité, l'enceinte est continûment balayée à un débit de 2 l/min par un mélange de gaz très pur constitué de 5% en volume d'hexafluore de soufre de pureté 99,97% dilué dans de l'argon de pureté 99,9996% et contenant moins de 2 ppm en volume d'eau et moins de 5 ppm en volume d'oxygène. En ce qui concerne le gaz de confinement traversant la membrane poreuse, sa pression est régulée pendant toute la durée de l'expérience à 120 mbars par rapport à la pression intérieure de l'enceinte (voisine de la pression atmosphérique). Le gaz de confinement est par exemple du même type que celui utilisé pour le balayage de l'enceinte.

Toutes les dispositions particulières qui viennent d'être décrites peuvent s'appliquer de la même manière à l'élaboration d'un tube.

Le procédé selon l'invention pour l'élaboration du barreau désiré comprend les opérations suivantes.

La souche originelle 110 est introduite dans le piédestal 5, lui-même entouré par la membrane poreuse 2.

Le débit total de gaz à travers la membrane poreuse est réglé à une valeur de l'ordre de 0,135 l/min à température ambiante.

Le système de chauffage (cartouches 21 et 22) est mis en route à une vitesse de chauffe de 100°C/min jusqu'à ce que la température, au niveau du verre, atteigne 710°C. Le verre constituant la souche originelle 110 se trouve alors à l'état fondu. Il est maintenu à la température de 710°C pendant environ 15 minutes de manière à atteindre l'équilibre thermique et à éliminer les éventuelles bulles de gaz provenant de l'interface verre-piédestal 5. Le débit total du gaz de confinement à travers la membrane poreuse est alors égal à 0,06 l/min du fait de l'augmentation de la température et de l'augmentation de la viscosité du gaz en résultant.

On fait alors remonter le piston 7 dans la cavité 1 à une vitesse de 2 mm/min sur une hauteur totale de 27 mm. Le bain fluoré constitué du verre de souche fondu remonte donc lentement et est progressivement extrait du piédestal 5. Il se trouve ainsi confiné entre les parois de la membrane poreuse 2, sans toucher cette dernière à aucun moment, sa hauteur confinée augmentant régulièrement. Le film de gaz est ainsi formé de manière régulière et reproductible. L'opération précédente est appelée opération d'injection du verre à l'état fondu.

Une fois l'injection terminée, la température du bain est augmentée jusqu'à 750°C pour l'affinage et maintenue à cette valeur pendant 15 minutes.

On alimente alors la souche confinée en poudre de constituants du verre, à partir des moyens de distribution 30, et simultanément, l'ensemble piédestal 5-piston 7-bain fluoré confiné est translaté vers le bas à une vitesse constante de 2 mm/min, en assurant toujours les mêmes conditions pour les différents débits gazeux ; le verre est continûment refroidi avec un gradient thermique moyen de -75°C/cm entre 620°C et 310°C, ce qui correspond à une vitesse de refroidissement de -15°C/min dans cette zone critique de température où risque de s'initier la cristallisation du verre. Le refroidissement se termine à la vitesse de -7,5°C/min jusqu'à la température de transition vitreuse de 260°C avant que l'échantillon de verre solide ne passe la limite inférieure de la membrane poreuse 2. Pendant la translation du bain fluoré et son refroidissement, on n'observe aucun mouillage du verre sur la paroi, et les conditions de pression restent constantes au cours du temps.

Comme lors de l'élaboration du tube, on récupère donc à la fin du procédé un barreau de verre.

Etant donné que les conditions stables de confinement ne dépendent au premier ordre ni de la section de la colonne de bain liquide, ni de son ou de ses diamètres, mais des caractéristiques de la ou des membranes poreuses, du jeu radial piédestal-membranes poreuses, de la hauteur du piédestal et de la hauteur de la colonne liquide, les conditions de fabrication d'un tube de verre sont sensiblement les mêmes que celles de fabrication d'un barreau. Les jeux piédestaux-membranes ont des valeurs similaires aussi bien pour la membrane extérieure que pour la membrane intérieure dans le cas du tube.

La préparation de la souche de verre par confinement gazeux permet, dans le procédé de l'invention, d'établir sur quelques millimètres de hauteur un film de gaz confinant la charge et permettant de poursuivre l'élaboration par ajout de poudres en continu.

L'utilisation d'une souche originelle et éventuellement du "piédestal-injecteur" dans le procédé de l'invention permet donc d'obtenir un film gazeux très régulier et ainsi de préparer de manière simple et reproductible aussi bien un tube qu'un barreau dont la pureté finale ne dépend que de la pureté initiale des produits fluorés de départ, des gaz réactifs et des graphites utilisés.

En outre, l'avantage de la technique de confinement par film de gaz réside dans le fait qu'aucune contamination supplémentaire ne provient de contacts du bain en fusion avec les parois pendant l'élaboration. L'absence de moules pour fabriquer un tube ou un barreau et donc de polissages mécaniques et/ou chimiques ultérieures des surfaces confinées ajoute encore à la qualité des pièces obtenues.

La qualité optique du verre obtenu peut se traduire en terme de centres diffusants (défauts) précipités à l'intérieur de la matrice vitreuse et contribuant à l'atténuation de la fibre obtenue à partir du tube et du barreau fabriqués, en provoquant des pertes par diffusion. La technique de confinement par film de gaz a permis de préparer des échantillons de verres fluorés contenant un nombre de défauts diffusants résiduels très faible (de l'ordre de 100 défauts par cm³), ces défauts étant de taille inférieure au micron. Ceci correspond à des pertes par diffusion de l'ordre de 0,015 dB/km à une longueur d'onde de 2,55 µm. Ce nombre de défauts est de 10 à 100 fois plus faible que ceux donnés dans la littérature (méthode classique) et la qualité optique globale est similaire à celle d'échantillons de Suprasil 1, qui est une des meilleures qualités de silice synthétique du même type que celles utilisées actuellement en tant que fibres optiques.

A l'aide du procédé selon l'invention, on peut fabriquer un barreau et un tube de verre fluoré pour réaliser une préforme de fibre optique. Pour cela, on prépare un barreau de verre de coeur, par exemple de composition 54 ZrF₄-23 BaF₂-4 LaF₃-3 AlF₃-16 NaF en pourcentage molaire.

On prépare également de la manière décrite précédemment un tube de verre de gaine par exemple de composition 53 ZrF₄-20 BaF₂-4 LaF₃-4 AlF₃-19 NaF en pourcentage molaire.

Les hauteurs du barreau et du tube peuvent être fixés à 10 cm (mais peuvent bien sûr être beaucoup plus importantes). Le barreau de verre de coeur a par exemple un diamètre extérieur moyen de 10,05 mm, et le tube de verre de gaine un diamètre intérieur de 10,00 mm et un diamètre extérieur de 20,00 mm. Ces dimensions précises sont obtenues par un choix adapté des dimensions des différentes pièces intervenant dans le procédé de l'invention (membranes poreuses, piédestaux, etc...).

Le barreau est ensuite introduit à l'intérieur du tube selon une technique bien connue de l'homme de l'art sous le nom de "barreau dans tube" (rod-in-tube), de manière à former une préforme qui, dans l'exemple choisi, possède une différence d'indice de l'ordre de 5.10⁻³. L'ajustement du barreau et du tube est pratiquement parfait étant donné les dimensions aux tolérances très serrées de ceux-ci, obtenues grâce au procédé de l'invention.

Toutes les opérations de stockage, les diverses manipulations des verres et la préparation de la préforme se font avantageusement sous atmosphère neutre et contrôlée en humidité de manière à éviter toute détérioration par l'atmosphère ambiante des surfaces de très grande qualité des verres avant fibrage.

La préforme ainsi formée est transférée sur une tour de fibrage et réchauffée à une température adéquate, par exemple autour de 310°C, et la fibre étirée est homothétique de la préforme primitive. Dans l'exemple précédent, pour un diamètre total de la fibre de 125 µm, le coeur a un diamètre de l'ordre de 62,5 µm. La fibre ainsi décrite est donc multimode.

Pour préparer une fibre monomode à partir de la préforme précédente, on peut dans un premier temps préparer une grosse fibre intermédiaire de quelques millimètres de diamètre. Cette grosse fibre est ensuite introduite dans un autre tube de verre de gaine (préparé selon le procédé de l'invention ou par un autre procédé classique car la qualité du verre est moins importante pour l'interface entre les première et deuxième gaines). Cette nouvelle préforme donne une fibre dont le diamètre de coeur est fortement réduit par rapport à la préforme initiale. On peut ainsi réaliser des fibres monomodes ayant des diamètres de coeur de quelques micromètres, et donc aptes aux applications en télécommunications en tant que fibres longues distances à basses atténuations et en tant qu'amplificateurs optiques (dopage du verre de coeur avec des terres rares, forte différence d'indice).

Bien entendu, l'invention n'est pas limitée aux modes de mise en oeuvre qui viennent d'être décrits.

En particulier, la couche de pyrocarbone n'est pas essentielle. Toutefois, si la couche de pyrocarbone est absente, le verre fluoré risque d'adhérer au graphite, et on observe alors des fractures lors du refroidissement, dues à la grande différence entre les coefficients de dilatation du graphite (5.10⁻⁶°C⁻¹ et du verre fluoré ZBLAN (20.10⁻⁶°C⁻¹).

D'autre part, les valeurs des différents paramètres ont été données à titre indicatif.

Notamment, dans d'autres expériences, des vitesses d'injection de 0,5 à 3 mm/min et des vitesses de translation de 0,5 à 3mm/min ont été testées avec succès.

De même, des graphites avec des perméabilités de 7.10⁻¹⁶ m² à 7.10⁻¹⁵ m² ont été testés avec succès. Il est toutefois préférable d'adapter la pression du gaz de confinement en fonction de la valeur de la perméabilité : lorsque la valeur de la perméabilité diminue, on augmente la valeur de la pression de régulation du gaz de confinement.

Enfin, le procédé de l'invention n'est limité ni aux verres fluorés, ni aux formes particulières de tube ou de barreau, et l'on pourra, sans sortir du cadre de l'invention, remplacer tout moyen par un moyen équivalent.

## Revendications

1. Procédé de fabrication d'une pièce cylindrique en verre, notamment mais non exclusivement en verre fluoré, ledit procédé comprenant les opérations suivantes :
- l'on met en oeuvre une cavité cylindrique verticale (1) tapissée de membranes poreuses (2, 3), dont les dimensions internes sont supérieures de quelques dizaines de microns à celles de ladite pièce, et dans laquelle est susceptible de coulisser un piédestal cylindrique (5) constituant un support pour ladite pièce,
- on prévoit sur ledit piédestal (5) une souche originelle (11) constituée dudit verre,
- on chauffe ladite souche jusqu'à la fusion et on injecte un gaz en permanence dans lesdites membranes poreuses (2, 3) pour maintenir entre elles et ladite souche en fusion (101) une couche de gaz de quelques dizaines de microns d'épaisseur évitant ainsi tout contact,
- on alimente ladite souche à l'état fondu (101) par le haut de ladite cavité (1) par une distribution continue (30) d'une poudre des constituants dudit verre,
- on descend ledit piédestal (5) au fur et à mesure de la formation de ladite pièce cylindrique à partir de ladite souche (11).

2. Procédé selon la revendication 1 caractérisé en ce que :
- ledit piédestal (5) a lui-même la forme d'un corps cylindrique creux fermé à sa partie inférieure par un piston (7),
- ledit piédestal contient initialement une charge solide en verre (11) destinée à former ladite souche originelle,
- on extrait progressivement dudit piédestal (5) ladite souche à l'état fondu en poussant ledit piston (7) vers le haut.

3. Procédé selon l'une des revendications 1 ou 2 caractérisé par le fait que ledit piédestal (5) coulisse dans ladite cavité (1) avec une couche de gaz intermédiaire.

4. Procédé selon l'une des revendications 1 à 3 caractérisé par le fait que la pression de gaz dans lesdites membranes poreuses (2, 3) est régulée de manière à maintenir dans ladite cavité (1) à l'état stationnaire une colonne de verre fondu stable et de hauteur constante.

5. Procédé selon l'une des revendications 1 à 4 caractérisé par le fait que ladite pièce en formation est surmontée d'une colonne de verre fondu, l'interface à la température de transition vitreuse étant située au niveau de la base desdites membranes (2, 3).

6. Procédé selon l'une des revendications 1 à 5 caractérisé en ce que lesdites membranes poreuses (2, 3) sont réalisées en graphite de perméabilité DARCY de l'ordre de 10⁻¹⁵ m².

7. Procédé selon la revendication 6 caractérisé en ce que lesdites membranes poreuses (2, 3) sont recouvertes d'une couche mince de pyrocarbone.

8. Procédé selon l'une des revendications 1 à 7 caractérisé en ce que toutes les faces dudit piédestal (5) sont recouvertes d'une couche mince de pyrocarbone.

9. Procédé selon l'une des revendications 2 à 8 caractérisé en ce que ledit piston (7) est recouvert d'une couche de pyrocarbone.

10. Procédé selon l'une des revendications 1 à 9 caractérisé en ce que :
- ladite pièce cylindrique est un tube,
- ladite cavité (1) est tubulaire et tapissée de membranes poreuses coaxiales (2, 3),
- ledit piédestal (5) est annulaire.

11. Procédé selon la revendication 10 caractérisé par le fait que lesdites membranes (2, 3) ont même épaisseur et que les pressions appliquées sur les faces interne et externe du tube en formation sont égales.

12. Procédé selon l'une des revendications 1 à 9 caractérisé en ce que :
- ladite pièce cylindrique est un barreau,
- ladite cavité (1) est tubulaire et creuse,
- ledit piédestal (5) est tubulaire.

## Claims

1. Method of manufacturing a cylindrical part from glass, especially but not exclusively fluorinated glass, said method comprising the following operations:
- a cylindrical pedestal (5) constituting a support for said part is adapted to slide in a vertical cylindrical cavity (1) lined with porous membranes (2, 3) and the inside dimensions of which are a few tens of microns greater than those of said part,
- an initial seed mass (11) constituted from said glass is provided on said pedestal (5),
- said seed mass is heated until it melts and a gas is injected permanently into said porous membranes (2, 3) in order to maintain between them and said molten seed mass (101) a layer of gas a few tens of microns thick to prevent any contact,
- said molten seed mass (101) is fed continuously (30) from the top of said cavity (1) with the powder constituents of said glass, and
- said pedestal (5) is lowered as said cylindrical part is formed from said seed mass (11).

2. Method according to claim 1 characterised in that:
- said pedestal (5) is a hollow cylindrical body closed at the bottom by a piston (7),
- said pedestal initially contains a solid glass charge (11) adapted to form said initial seed mass, and
- said molten seed mass is extracted progressively from said pedestal (5) by pushing said piston (7) upwards.

3. Method according to claim 1 or claim 2 characterised in that said pedestal (5) slides in said cavity (1) with a layer of gas between them.

4. Method according to any one of claims 1 to 3 characterised in that the gas pressure in said porous membranes (2, 3) is controlled to maintain in said cavity (1) in the steady state a column of molten glass which is stable and of constant height.

5. Method according to any one of claims 1 to 4 characterised in that said part being formed is surmounted by a column of molten glass and the interface between them at the vitreous transition temperature is at the level of the base of said membranes (2, 3).

6. Method according to any one of claims 1 to 5 characterised in that said porous membranes (2, 3) are made from graphite with a DARCY permeability in the order of 10⁻¹⁵ m².

7. Method according to claim 6 characterised in that said porous membranes (2, 3) are covered with a thin pyrocarbon layer.

8. Method according to any one of claims 1 to 7 characterised in that all the surfaces of said pedestal (5) are covered with a thin pyrocarbon layer.

9. Method according to any one of claims 2 to 8 characterised in that said piston (7) is covered with pyrocarbon.

10. Method according to any one of claims 1 to 9 characterised in that:
- said cylindrical part is a tube,
- said cavity (1) is tubular and lined with coaxial porous membranes (2, 3), and
- said pedestal (5) is annular.

11. Method according to claim 10 characterised in that said membranes (2, 3) are the same thickness and the pressures applied to the inside and outside of the tube being formed are equal.

12. Method according to any one of claims 1 to 9 characterised in that:
- said cylindrical part is a rod,
- said cavity (1) is tubular and hollow, and
- said pedestal (5) is tubular.

## Patentansprüche

1. Verfahren zur Herstellung eines zylindrischen Bauteils aus Glas, insbesondere, aber nicht ausschließlich, aus fluoriertem Glas, wobei das Verfahren die folgende Schritte enthält:
- man verwendet einen vertikalen zylindrischen Hohlraum (1), der mit einer porösen Membran (2, 3) ausgekleidet ist und dessen Innenabmessungen um einige zehn um größer als die des Bauteils sind, wobei in dem Hohlraum ein zylindrischer Sockel (5) gleiten kann, der das Bauteil trägt,
- auf dem Sockel (5) wird ein Ursprungsstumpf (11) aus dem Glas aufgelegt,
- man erwärmt den Stumpf bis zur Schmelze und speist permanent ein Gas in die porösen Membranen (2, 3) ein, um zwischen diesen und dem geschmolzenen Stumpf (110) eine Gasschicht von einigen µm Dicke aufrechtzuerhalten, die jeden direkten Kontakt verhindert,
- man verteilt auf den geschmolzenen Stumpf (101) von der Oberseite des Hohlraums (1) kontinuierlich ein Pulver aus den Bestandteilen des Glases (30),
- man senkt den Sockel (5) während der Bildung des zylindrischen Bauteils ausgehend von dem Stumpf (11) ab.

2. Verfahren nach Anspruch 1, dadurch gekennzeichnet,
- daß der Sockel (5) selbst die Form eines Hohlzylinders besitzt, der an seinem unteren Bereich durch einen Kolben (7) verschlossen wird,
- daß der Sockel ursprünglich einen Stumpf aus erstarrtem Glas (11) enthält, der den ursprünglichen Stumpf bilden soll,
- daß man durch Verschieben des Kolbens (7) nach oben den Stumpf im geschmolzenen Zustand zunehmend aus dem Sockel (5) hinausschiebt.

3. Verfahren nach einem der Ansprüche 1 und 2, dadurch gekennzeichnet, daß der Sockel (5) in dem Hohlraum (1) auf einer Zwischengasschicht gleitet.

4. Verfahren nach einem der Ansprüche 1 bis 3, dadurch gekennzeichnet, daß der Gasdruck in den porösen Membranen (2, 3) so geregelt wird, daß in dem Hohlraum (1) im stationären Zustand eine stabile Säule aus geschmolzenem Glas konstanter Höhe aufrechterhalten wird.

5. Verfahren nach einem der Ansprüche 1 bis 4, dadurch gekennzeichnet, daß sich über dem sich bildenden Bauteil eine Säule aus geschmolzenem Glas befindet, wobei der Übergang zur Glasphase bei der Übergangstemperatur in Höhe der Basis der Membranen (2, 3) liegt.

6. Verfahren nach einem der Ansprüche 1 bis 5, dadurch gekennzeichnet, daß die porösen Membranen (2, 3) aus Graphit mit einer Durchlässigkeit nach DARCY von etwa 10⁻¹⁵m² bestehen.

7. Verfahren nach Anspruch 6, dadurch gekennzeichnet, daß die porösen Membranen (2, 3) mit einer dünnen Schicht aus Pyrokohlenstoff bedeckt sind.

8. Verfahren nach einem der Ansprüche 1 bis 7, dadurch gekennzeichnet, daß alle Seiten des Sockels (5) mit einer dünnen Schicht aus Pyrokohlenstoff bedeckt sind.

9. Verfahren nach einem der Ansprüche 2 bis 8, dadurch gekennzeichnet, daß der Kolben (7) mit einer Schicht aus Pyrokohlenstoff bedeckt ist.

10. Verfahren nach einem der Ansprüche 1 bis 9, dadurch gekennzeichnet,
- daß das zylindrische Bauteil ein Rohr ist,
- daß der Hohlraum (1) rohrförmig ist und mit koaxialen porösen Membranen (2, 3) ausgekleidet ist,
- daß der Sockel (5) ringförmig ist.

11. Verfahren nach Anspruch 10, dadurch gekennzeichnet, daß die Membranen (2, 3) gleiche Dicke besitzen und daß die auf die Innenseite und die Außenseite des sich bildenden Rohrs einwirkenden Drücke einander gleich sind.

12. Verfahren nach einem der Ansprüche 1 bis 9, dadurch gekennzeichnet,
- daß das zylindrische Bauteil ein Barren ist,
- daß der Hohlraum (1) rohrförmig und hohl ist,
- daß der Sockel (5) rohrförmig ist.
